# EUROPEAN PATENT APPLICATION

(11) **EP 1 772 513 A1**
(43) Date of publication of application: **11.04.2007**
(21) Application number: 05748788.6
(22) Date of filing: 08.06.2005
(51) Int. Cl.: C12C 1/02, C12C 7/04, C12C 7/16, C12C 11/00, C12C 11/02

(54) **PROCESS FOR PRODUCING PROCESSED BARLEY AS RAW MATERIAL FOR BREWING, PROCESSED BARLEY AS RAW MATERIAL FOR BREWING, PROCESS FOR PRODUCING WORT, PROCESS FOR PRODUCING MALT-DERIVED ALCOHOLIC BEVERAGE, AND METHOD OF IMPROVING REAL DEGREE OF FERMENTATION OF MALT-DERIVED ALCOHOLIC BEVERAGE**

(30) Priority: 11.06.2004 JP 2004174633
(71) Applicant: Sapporo Breweries Limited, Tokyo 150-8522 (JP)
(72) Inventor: KISHINAMI, Isao, c/o SAPPORO BREWERIES LIMITED, Tokyo 150-8522 (JP)
(74) Representative: Berryman, Natalia Grace
(86) International application number: PCT/JP2005/010491
(87) International publication number: WO 2005/121304

(57) **Abstract**

A method for producing processed barley as a raw material for brewing, comprising the step of heat treating ground barley suspended in water for processing into ground barley in the form of paste.

## Description

### Technical Field

The present invention relates to a method for producing processed barley as a raw material for brewing, processed barley as a raw material for brewing, a method for producing wort, a method for producing a malt alcoholic drink, and a method for improving a real attenuation of a malt alcoholic drink.

### Background Art

Ground barley obtained by simply subjecting barley to pulverization processing without making barley into malt can be used as a raw material for malt alcoholic drinks such as a regular beer and a low-malt beer. The use of ground barley contributes to the improvement of the flavor of malt alcoholic drinks having low malt usage ratios such as the low-malt beer.

Patent document 1: Japanese Laid-Open No. 04-027379

### Disclosure of the Invention

### Problems to be Solved by the Invention

However, the present inventors have found that the use of a particular variety of barley as ground barley makes insufficient the final real attenuation of wort obtained in the intermediate process for the production of a malt alcoholic drink. The final real attenuation indicates the proportion of saccharides easily assimilated by an yeast in the saccharides contained in wort. Thus, it follows that the use of wort having a low final real attenuation poses a problem that the yield rate of a malt alcoholic drink as a final product is lowered. On the other hand, the use of wort having a high final real attenuation by reducing the usage ratio of ground barley results in producing a problem that the flavor of the malt alcoholic drink is not improved.

Thus, an object of the present invention is to provide processed barley as a raw material for brewing, capable of giving wort having a sufficient final real attenuation even when any variety of barley is used.

### Means for Solving the Problem

In order to achieve the above object, the present invention provides a method for producing processed barley as a raw material for brewing, comprising a step of heat treating ground barley suspended in water for processing into ground barley in the form of paste. The present invention also provides processed barley as a raw material for brewing, obtained by the above-described production method. The present invention further provides a method for wort, comprising a saccharification step of mixing, with malt, he processed barley as a raw material for brewing obtained by the method for producing processed barley as a raw material for brewing according to the present invention, followed by saccharifying the formed mash to provide a saccharified liquor, and a filtration step of filtering the saccharified liquor to provide wort.

Producing wort using processed barley obtained by this production method provides wort having a sufficient final real attenuation. A mechanism through which the use of processed barley as a raw material for brewing according the present invention improves the final real attenuation of wort is not necessarily certain, but the present inventors believe that the heat treatment promotes the pregelatinization of starch contained in ground barley for the changing thereof into an easily saccharifiable form.

In addition, the use of the method for producing processed barley as a raw material for brewing according to the present invention enables microorganisms adhering to barley to be killed by the heat treatment. A large amount of microorganisms including Bacillus subtilis generally adhere to barley. Raw barley free from passing through malting processes such as roasting and steeping is not yet subjected to treatments for killing or decreasing microorganisms, such as heat treatment and washing. Because ground barley typically is not subjected to these treatments, there has been a high possibility that a large amount of microorganisms are present in the produced wort if the worf was produced from ground barley by a conventional method. The method for producing processed barley as a raw material for brewing according to the present invention enables the solution of these problems, facilitates the production of wort not contaminated with microorganisms, and makes possible the appropriate control of microorganisms.

To achieve a sufficient final real attenuation and to perform a satisfactory sterilization, the condition of heat treatment is preferably 90°C to 125°C in the method for producing processed barley as a raw material for brewing according to the present invention.

The present invention also provides a method for producing a malt alcoholic drink, comprising a boiling step of adding a hop to the wort obtained by the above-described method for producing wort, followed by boiling; a cooling step of cooling the wort after the boiling step; a fermentation step of adding an yeast to the wort after the cooling step, followed by fermenting the wort to provide a fermented liquor; a ripening step of ripening the fermented liquor; and a filtration step of filtering the ripened fermented liquor to provide a malt alcoholic drink.

The method for producing a malt alcoholic drink according to the present invention can use wort having a sufficiently high final real attenuation and allows the usage rate of ground barley to be satisfactorily increased, thereby enabling the production of a malt alcoholic drink excellent in flavor with a good yield rate.

The present invention further provides a method for improving a real attenuation of a malt alcoholic drink, wherein the method uses ground barley in the form of paste as a raw material for the malt alcoholic drink. As previously noted, the use of ground barley in the form of paste improves the final real attenuation of wort, which also improves the real attenuation of the malt alcoholic drink produced by employing the wort. In order to achieve a sufficient real attenuation, ground barley in the form of paste is preferably that obtained by heat treating ground barley.

### Effect of the Invention

According to the method for producing processed barley as a raw material for brewing of the present invention, any variety of barley can be processed into a form where the starch and the like contained in barley is easily saccharified. According to the method for producing wort employing such processed barley, wort having a sufficient final real attenuation can be obtained. In addition, according to the method for producing a malt alcoholic drink using the resultant wort, a malt alcoholic drink excellent in flavor can be obtained with a good yield rate.

### Best Mode for Carrying Out the Invention

A preferred embodiment according to the present invention is described below.

### (Processed barley as a raw material for brewing and a method for producing the same)

Processed barley as a raw material for brewing and a method for producing the same are first described. The method for producing processed barley as a raw material for brewing according to the present invention comprises a step of heat treating ground barley suspended in water for processing into ground barley in the form of paste.

Ground barley contains polysaccharides such as starch which are raw materials for saccharification, but, in the step, ground barley seems to have become to be easily decomposed by hydrolases through the change of the structure of the polysaccharides such as starch. Here, ground barley refers to a pulverized product of a non-germinated barley seed, and may be that commonly used as a raw material for malt alcoholic drinks.

The heat treatment is not particularly restricted provided that it is a treatment capable of making ground barley into a paste form, and achieved, for example, by autoclave treatment. To obtain processed barley providing a raw material for wort having a sufficient final real attenuation, the condition of the heat treatment is preferably 90°C to 125°C because the gelatinization occurs at 90°C or more. In addition, the heat treatment is particularly preferably carried out at 100°C to 125°C because the time of heat treatment (the time of gelatinization treatment) can be shortened. The autoclave treatment is suitable for heating at 100°C or more, and can maintain a high temperature state of 120°C to 125°C under a pressure of the order of 2 to 3 atmospheres. The treatment time just has to enable ground barley to be made into a paste form, and is typically on the order of 15 minutes in the case of 120°C.

### (Method for producing wort)

A method for producing wort is then described. The method for producing wort according to invention comprises a saccharification step of mixing, with malt, processed barley as a raw material for brewing obtained by the method for producing processed barley as a raw material for brewing according to the present invention, followed by saccharifying the formed mash to provide a saccharified liquor, and a filtration step of filtering the saccharified liquor to provide wort. This production method can make sufficient the final real attenuation of the wort obtained, and enables the contamination of the wort with microorganisms to be reduced.

The saccharification step is a step of saccharifying the mash to provide a saccharified liquor. The mash is formed by mixing ground barley processed into a paste form by the heat treatment with malt. The malt used here is preferably that obtained by giving water and air to barley for germination, followed by drying to remove germs. The malt is an enzyme source necessary for wort production and also provides a major starch source as a raw material for saccharification. In addition, the malt can be roasted to impart a flavor and color characteristic of a malt alcoholic drink. By way of example, barley can be subjected to steeping to a steeping degree of 40 to 45% before germination at 10 to 20°C for 3 to 6 days, followed by roasting to provide a desired malt.

In addition to ground barley and malt, other raw materials used for mash production, for example, water, malt extract, corn starch, corn grits, rice, and saccharides may be optionally added and mixed to produce a mash. Further, enzymes such as α-amylase, β-glucanase, and pullulanase may be optionally added and mixed to produce a mash. The addition of such enzymes enables the mash to be efficiently saccharified.

The mash thus formed is warmed to a prescribed temperature (preferably 50 to 70°C) to provide a saccharified liquor. The saccharification diagram (temperature and time) is not particularly restricted; a conventional diagram used for producing a malt alcoholic drink can be applied in extensor. In addition, an appropriate diagram can be easily set by one of skill in the art.

The filtration step is a step of filtering the saccharified liquor obtained in the saccharification step to provide wort. The filtration can remove the cakes of the malt, ground barley, and other raw materials, not dissolved in the saccharified liquor.

In this respect, the step of producing the saccharified liquor, including the production of the above-described processed barley can be carried out using a conventional feed system for a regular beer or a low-malt beer. By way of example, a typical feed system is composed of a feed vessel and a feed tank. A mash is prepared in the feed vessel from a part of the malt used as a raw material for a malt alcoholic drink and auxiliary materials, and transferred to the feed tank containing the mash prepared from the rest of the malt used as a raw material for a malt alcoholic drink to mix the mashes, followed by saccharification.

In the case of the present invention, ground barley in the form of paste is preliminarily prepared in a feed tank, and a mash can be prepared from malt and auxiliary materials in a feed vessel and transferred to the feed tank to prepare a mixed mash, followed by saccharification. Alternatively, ground barley in the form of paste is preliminarily prepared in a feed vessel, and a part of the malt used as a raw material for a malt alcoholic drink and auxiliary materials are added to the feed vessel to prepare a mash from the pulverized in the form of paste, the malt, and the auxiliary materials. The mash thus obtained may be transferred to the feed tank containing the mash prepared from the rest of the malt used as a raw material for a malt alcoholic drink to prepare a mixed mash, followed by saccharification.

### (Method for producing a malt alcoholic drink)

A method for producing a malt alcoholic drink will be now described. The method for producing a malt alcoholic drink according to the present invention comprises a boiling step of adding a hop to the wort obtained by the above-described method for producing wort, followed by boiling; a cooling step of cooling the wort after the boiling step; a fermentation step of adding an yeast to the wort after the cooling step and fermenting the wort to provide a fermented liquor; a ripening step of ripening the fermented liquor; and a filtration step of filtering the ripened fermented liquor to provide a malt alcoholic drink. According to this production method, a malt alcoholic drink excellent in flavor can be obtained with a good yield rate.

The malt alcoholic drink refers to an alcoholic drink obtained using malt as a raw material, and the malt usage ratio and alcohol content thereof are not particularly restricted. Examples of the malt alcoholic drink include a regular beer and a low-malt beer which have usage ratios of the malt to the raw materials of 66.7% or more and less than 66.7%, respectively.

The boiling step is a step of adding a hop to the wort and boiling the mixture. This imparts a flavor and bitter taste characteristic of a malt alcohol, and stops the action of malt enzymes. The content of hops in the saccharified liquor is preferably within the range of 0.5 to 3.0 g/L, and the boiling time of the mixture is preferably 90 to 120 minutes.

The wort (hot wort) after the boiling step is cooled to a prescribed temperature, and then supplied to a fermentation step to be described below. In the cooling step, the hot wort is cooled to 15°C or lower.

In the fermentation step, an yeast is added to the wort after the cooling step to ferment the wort to provide a fermented liquor. The yeast used in the fermentation step is not particularly restricted provided that it is an enzyme metabolizing saccharides in the wort to produce alcohol, carbon dioxide gas, and the like (an alcohol beverage yeast performing so-called alcohol fermentation), and specific examples thereof include Saccharomyces cerevisae and Saccharomyces uvarum. In addition, the conditions of fermentation are not particularly restricted, but the fermentation temperature is preferably 15°C or lower, more preferably 8 to 10°C and the fermentation time is preferably 8 to 10 days.

The fermented liquor thus obtained is ripened, followed by filtering this to provide a malt alcoholic drink. The conditions in the ripening step are not particularly restricted, but the refermentation and ripening of the remaining extract can be suitably carried out, for example, by the storage thereof in a closed tank or the like at a storage temperature of -5 to 3°C for 30 to 90 days.

The conditions of filtration are also not particularly restricted, but the filtration is performed using diatomite, PVPP (polyvinylpolypyrrolidone), silica gel, cellulose powder, or the like as a filter aid. The malt alcoholic drink obtained by the filtration is shipped to the market, for example, by the tanking, barreling, bottling, or canning thereof.

### (Method for improving a real attenuation of a malt alcoholic drink)

A method for improving a real attenuation of a malt alcoholic drink will be finally described. The method for improving a real attenuation of a malt alcoholic drink according to the present invention is characterized by using ground barley in the form of paste as a raw material for the malt alcoholic drink. As previously noted, because ground barley in the form of paste is used to improve a final real attenuation of wort, the real attenuation of the malt alcoholic drink produced using the wort is also improved. In order to achieve a sufficient real attenuation, ground barley in the form of paste is preferably that obtained by heat treating ground barley.

### Example

The present invention is described below in further detail with reference to Comparative Examples and Example. However, the present invention is not intended to be limited to these examples.

In Comparative Examples and Example below, the production and analysis of wort were carried out by the following methods. The pulverization of barley was performed according to the EBC (European Brewery Convention) prescribed method using a DLFU disk mill (gap: 0.20 mm, fine grinding). Then, 15.8 g of malt, 50 g of ground barley, and 330 mL of water were mixed, to which 0.05 g of α-amylase, 0.01 g of β-glucanase, and 0.05 g of pullulanase were further added as enzymes to form a mash. This mash was saccharified according to the diagram of 50°C for 30 minutes, 60°C for 30 minutes, 65°C for 30 minutes, and 75°C for 3 minutes, followed by filtering the resultant saccharified liquor to produce wort.

The wort thus obtained was analyzed according to the EBC standard method (Analytica EBC (4th Ed.), European Brewery Convention Ed., 1987).

### (Comparative Example 1)

Worts were first produced using two kinds of barley (Ryofu and Copeland), followed by comparing the analytical values of the resultant worts. The qualities of barley used are shown in Table 1.

**[Table 1]**

| Variety | Water content (%) | Crude protein content (%) | Germination rate (%) |
|---|---|---|---|
| Ryofu | 11.6 | 10.6 | 98.6 |
| Copeland | 10.6 | 11.3 | 99.4 |

As shown in Table 1, no great difference was observed between the qualities of both varieties. Both varieties were used for producing the worts by selecting barley grains having a regulated particle size of 2.2 mm or more. The analytical values of the worts obtained using Ryofu and Copeland are shown in Table 2.

**[Table 2]**

| Variety | Ryofu | Copeland |
|---|---|---|
| Water content (%) | 11.5 | 10.5 |
| Crude protein (%) | 10.6 | 11.2 |
| Extract (w/w%) | 10.3 | 10.9 |
| Chromaticity (°EBC) | 2.9 | 2.4 |
| Boiling chromaticity (°EBC) | 5.4 | 4.8 |
| pH | 5.87 | 5.91 |
| Viscosity (mPa·s) | 1.59 | 1.59 |
| β-Glucan (mg/L)* | 50 | 24 |
| Total nitrogen (mg/L)* | 59.5 | |
| FAN (mg/L)* | 93 | 93 |
| Final real attenuation (%) | 77.8 | 75.8 |
| β-Glucan (mg/L) | 51 | 26 |
| Total nitrogen (mg/L) | 61.3 | |
| FAN (mg/L) | 96 | 101 |

The analytical values marked with * are values corresponding to those when the extract content is 10%.

As seen from the results shown in Table 2, the wort produced using Ryofu had a final real attenuation of 77.8%, whereas that produced using Copeland had a lower final real attenuation of 75.8%. Thus, it was shown that the final real attenuation of wort varied depending on the variety of ground barley used.

Worts were then produced using pulverized Copeland barley subjected to various treatments to examine whether the final real attenuations of the worts could be improved or not.

### (Comparative Example 2)

Barley grains (Copeland) were placed in a drier and subjected to roasting treatment in conditions of (1) 84°C and 7 hours or (2) 185°C and 30 minutes. After the roasting treatment, barley was pulverized, followed by producing worts by the above-described method to analyze the worts. The analytical values of the worts are shown in Table 3.

**[Table 3]**

| Roasting treatment | Treatment at 84°C | Treatment at 185°C |
|---|---|---|
| Water content (%) | 4.8 | 1.6 |
| Crude protein (%) | 11.5 | 12.1 |
| Extract (w/w%) | 11.4 | 11.3 |
| Chromaticity (°EBC) | 2.6 | 38.3 |
| Boiling chromaticity (°EBC) | 5.1 | 36.9 |
| pH | 5.91 | 5.47 |
| Viscosity (mPa·s) | 1.64 | 1.64 |
| β-Glucan (mg/L)* | 24 | 19 |
| Total nitrogen (mg/L)* | | 50.1 |
| FAN (mg/L)* | 91 | 70 |
| Final real attenuation (%) | 75.2 | 60.8 |
| β-Glucan (mg/L) | 27 | 22 |
| Total nitrogen (mg/L) | | 56.6 |
| FAN (mg/L) | 104 | 79 |

The analytical values marked with * are values corresponding to those when the extract content is 10%.

As seen from the results shown in Table 3, each of the roasting treatments at 84°C and 185°C significantly increased the extract content. This may be due to that the heat treatment probably inhibited the decomposition of carbohydrates such as starch by hydrolases and significantly decreased the water content. However, both of the roasting treatments reduced the final real attenuations of the worts when compared to non-treatment. From these results, it was demonstrated that roasting treatment can not increase the final real attenuation of wort.

### (Comparative Example 3)

Barley grains (Copeland) were subjected to microwave irradiation. Specifically, the cycle of irradiating the barley grains with a microwave of 500 W for one minute and then allowing them to stand for one minute was repeated 4 times. This treatment swelled the barley grains into a popcorn form. After the microwave irradiation treatment, barley was pulverized, followed by producing wort by the above-described method before analyzing the wort. The analytical values of the wort are shown in Table 4.

**[Table 4]**

| Treatment | Microwave irradiation |
|---|---|
| Water content (%) | 1.5 |
| Crude protein (%) | 12 |
| Extract (w/w%) | 11.4 |
| Chromaticity (°EBC) | 20.9 |
| Boiling chromaticity (°EBC) | 21.5 |
| pH | 5.54 |
| Viscosity (mPa·s) | 1.63 |
| β-Glucan (mg/L)* | 16 |
| Total nitrogen (mg/L)* | 49.5 |
| FAN (mg/L)* | 68 |
| Final real attenuation (%) | 71.4 |
| β-Glucan(mg/L) | 18 |
| Total nitrogen (mg/L) | 56.4 |
| FAN (mg/L) | 77 |

The analytical values marked with* are values corresponding to those when the extract content is 10%.

As seen from the results shown in Table 4, the microwave irradiation treatment significantly increased the extract content, but reduced the final real attenuation. From these results, it was demonstrated that microwave irradiation treatment can not increase the final real attenuation of wort.

### (Example 1)

To 50 g of ground barley (Copeland) was added 250 mL of water before suspension, which was then subjected to heat treatment (treatment in an autoclave at 2 atmospheres and 120°C for 15 minutes). This treatment swelled ground barley into a paste form. After the solution temperature of ground barley lowered to 50°C, wort was produced by the above-described method, followed by analyzing the wort. In this respect, ground barley subjected to the high pressure steam treatment had a sufficient flowability at a solution temperature of around 50°C, which did not affect the production of the wort. The analytical values of the wort are shown in Table 5.

**[Table 5]**

| Treatment | High pressure steam treatment |
|---|---|
| Water content (%) | |
| Crude protein (%) | 12.1 |
| Extract (w/w%) | 10.9 |
| Chromaticity (°EBC) | 2.7 |
| Boiling chromaticity (°EBC) | 5.7 |
| pH | 5.85 |
| Viscosity (mPa·s) | 1.64 |
| β-Glucan (mg/L)* | 5 |
| Total nitrogen (mg/L)* | 57.3 |
| FAN (mg/L)* | 99 |
| Final real attenuation (%) | 79.3 |
| β-Glucan (mg/L) | 5 |
| Total nitrogen (mg/L) | 62.5 |
| FAN (mg/L) | 108 |

The analytical values marked with * are values corresponding to those when the extract content is 10%.

As seen from the results shown in Table 5, the heat treatment led to a final real attenuation of 79.3%, which was markedly higher than that for non-treatment, although it did not change the extract content. When worts were produced by a conventional method using pulverized Ryofu, Myogi Nijo and Gardner barley, the final real attenuations thereof were 77.8, 77.5, and 76.7, respectively; when worts were produced according to the method of the present invention using even pulverized Copeland barley which was a variety giving a low final real attenuation, the final real attenuation exceeded any of the above values.

In addition, we examined whether the heat treatment could sterilize microorganisms adhering to barley- or not. Before and after heat treatment (in an autoclave at 2 atmospheres and 120°C for 15 minutes), the number of microorganisms adhering to each ground barley was determined using a smear-plating method. Specifically, 10 g of each ground barley was suspended in 100 mL of 25 mM phosphate buffer (containing 0.85% NaCl, pH 7.2), followed by slight centrifugation. The above buffer was added to 1.0 mL of the supernatant, which was then properly diluted, followed by applying 1.0 mL of the diluted solution to SCD (standard agar) medium and H medium before culturing at 30°C for 2 days. After the culture, the formed colonies were measured and defined as the viable cell number. The number of microorganisms adhering to each ground barley before or after the heat treatment thus measured is shown in Table 6.

**[Table 6]**

| Culture medium | SCD medium | | H medium | |
|---|---|---|---|---|
| Barley variety | Ryofu | Copeland | Ryofu | Copeland |
| Before heat treatment | 1.76 × 10⁷ | 0.94 × 10⁶ | 2.08 × 10⁷ | 1.80 × 10⁶ |
| After heat treatment | Not Detected | Not Detected | Not Detected | Not Detected |

As shown in Table 6, the heat treatment could decrease the number of microorganisms adhering to each ground barley to below the limit of detection. Thus, wort can be produced according to the present invention to provide wort containing few microorganisms.

From the above results, it was demonstrated that the use of a heat-treated ground barley can increase the final real attenuation of a resultant wort. This method can reduce the amount of enzymes added to ground barley when compared to a conventional method, and can be expected to reduce the production cost of a malt alcoholic drink. In addition, the method enables the more excellent control of microorganisms when compared to a conventional method.

### Industrial Applicability

As described above, according to the method for producing processed barley as a raw material for brewing of the present invention, any variety of barley can be processed into a form where the starch contained in barley is easily saccharified. According to the method for producing wort employing such processed barley, wort having a sufficient final real attenuation can be obtained. In addition, according to the method for producing a malt alcoholic drink using the resultant wort, a malt alcoholic drink excellent in flavor can be obtained with a good yield rate.

## Claims

1. A method for producing processed barley as a raw material for brewing, comprising a step of heat treating ground barley suspended in water for processing into ground barley in the form of paste.

2. The production method according to claim 1, wherein the condition of the heat treatment is 90°C to 125°C.

3. Processed barley as a raw material for brewing, obtained by the production method according to claim 1 or 2.

4. A method for producing wort, comprising:
a saccharification step of mixing, with malt, processed barley according to claim 3, followed by saccharifying the formed mash to provide a saccharified liquor; and
a filtration step of filtering the saccharified liquor to provide the wort.

5. A method for producing a malt alcoholic drink, comprising:
a boiling step of adding a hop to the wort obtained by the method for producing wort according to claim 4, followed by boiling;
a cooling step of cooling the wort after the boiling step;
a fermentation step of adding an yeast to the wort after the cooling step, followed by fermenting the wort to provide a fermented liquor;
a ripening step of ripening the fermented liquor; and
a filtration step of filtering the ripened fermented liquor to provide a malt alcoholic drink.

6. A method for improving a real attenuation of a malt alcoholic drink, wherein the method uses ground barley in the form of paste as a raw material for the malt alcoholic drink.
